# EUROPEAN PATENT SPECIFICATION

(11) **EP 3 107 378 B1**
(45) Date of publication and mention of the grant of the patent: **17.04.2019**
(21) Application number: 15703113.9
(22) Date of filing: 19.01.2015
(51) Int. Cl.: A01J 5/017

(54) **MILKING ROBOT FOR ATTACHING A TEAT CUP**
MELKROBOTER ZUR BEFESTIGUNG EINES MELKBECHERS
ROBOT DE TRAITE À ATTACHER À UN GOBELET TRAYEUR

(30) Priority: 18.02.2014 NL 2012283
(43) Date of publication of application: 28.12.2016
(73) Proprietor: Lely Patent N.V., 3147 PB Maassluis (NL)
(72) Inventor: KORTEKAAS, Martinus Petrus, NL-3147 PA Maassluis (NL)
(74) Representative: Octrooibureau Van der Lely N.V.
(86) International application number: PCT/NL2015/050030
(87) International publication number: WO 2015/126241

(56) References cited:
- WO-A1-2009/057996
- WO-A1-2012/123944
- US-A1- 2010 186 675

## Description

The invention relates to a milking robot for the operator-assisted attachment of a teat cup to a teat of a dairy animal in the milking robot.

Such a milking robot is known per se, e.g. from document WO 2012/123944 A1. If a new cow is to be milked in the milking robot for the first time, much of the cow's data is not sufficiently known, in particular the positions of the teats of the cow in the milking robot. In addition, the cow herself is not yet used to automated milking. Therefore, it will usually be the case that a dairy animal, such as a cow, will be milked the first time, or the first few times, with the assistance of an operator. A known milking robot is then configured, for example, for the following method. The cow is standing in (the stall of) the milking robot. Guided by the operator, the robot arm is brought to such a position that it can be brought, between two legs, to a suitable position with respect to the udder. This is done, for example, by means of a joystick or push-buttons. Once the suitable position has been reached, with "suitable" meaning that there is a high probability that the automatic teat position-detecting system will find the teat to which the teat cup is to be attached, the operator gives a command to the milking robot to start the automatic teat position detection, after which the milking robot can attach the teat cup on the basis of the data resulting therefrom.

A drawback of this known milking robot and the associated method is that it often takes an unnecessarily long time for the milking cups to be attached during the initial milking. After all, certainly in the beginning, that is to say without any help from previously determined teat positions, the automatic teat detection will often take a long time, during which the dairy animal may also start to move which may adversely affect the teat detection. And should the automatic teat detection not succeed within the constraints of the associated algorithm, then the starting position will even have to be set again by the operator. In particular with large herds, such a so-called "initial milking" will be have to be performed relatively often and thus require a proportionally long period of time, which is not desirable for the business operation in general and for the operator in particular.

It is therefore an object of the present invention to improve the milking robot mentioned in the introduction in such a way that it is possible to attach the teat cup more quickly, in particular during the initial milking stage.

The invention achieves this object by means of a milking robot as claimed in claim 1. The idea behind this invention is that it is possible to position the robot arm with respect to the teat of the dairy animal in such a way that attaching by means of simply moving the teat cup upwards has a sufficient chance of success. In practice, there is some tolerance with regard to the position of the teat cup with respect to the teat, in particular because the attachment operation is supported by means of a vacuum created in the teat cup. In addition, dairy animals are living creatures which will move in the stall of the milking robot, or another milking station for the milking robot. Especially as the initial milking takes place on a "new" dairy animal, which will often be slightly restless, the position of the robot arm with respect to the teats will vary, so that it is very well possible for the teat cup to be positioned correctly with respect to the teat, even if this is coincidental. It would then be a waste of time to start a teat-locating process which, in most cases, will be more time-consuming, partly because of the start-up procedure, partly because of the likely movements of the dairy animal, resulting in the position becoming increasingly disadvantageous. By contrast, the milking robot according to the invention offers the possibility to skip the teat-locating process in case the teats are in an advantageous position and to proceed immediately to attaching by moving the milking cup upwards. In this way, it is possible to save a relatively large amount of time. Obviously, there is no guarantee that the attachment operation will succeed, but precisely because this alternative step of moving the milking cup directly upwards and attaching it requires little time, little time will be lost if the attachment operation does not succeed.

It should be noted here that the teat cup is usually a milking cup for milking milk from the teat. However, it may also be another cup, in particular a teat cup for cleaning and optionally foremilking of the teat. It is also possible to use an aftertreatment cup, for example for applying a substance to the teat. However, it should be noted that in that case, milking will already have taken place, so that it is then possible to attach the cup on the basis of the teat coordinates which were determined in that process. Finally, the control device does not have to be physically connected to the robot arm, but only has to be operatively connected thereto, e.g. by means of a communication link. The control device may therefore also comprise a portable apparatus, such as a remote control or mobile telephone.

Advantageous embodiments of the invention are described in the dependent claims as well as in the description below.

The milking robot according to the invention thus offers the possibility to, as it were, short-circuit the usual teat-locating procedure. This could apply, for example, in the case of a milking robot which will automatically attach a teat cup to a teat of a cow or another dairy animal, but does not succeed in doing so for one reason or another. This may be caused by the fact that the algorithm does not arrive at a sufficiently reliable decision for attaching, for example if a sensor is soiled or the like. In such cases, an operator may then intervene by, if the teat cup is situated sufficiently closely to the teat, taking the second decision step and inputting it into the control device of the milking robot. The latter will then no longer continue to try and detect the teat, but immediately move the teat cup upwards and attach the teat cup.

A very attractive embodiment which is combinable with all further features mentioned in this application is the one where the milking robot, and in particular the control unit, is configured so that the operator positions the robot arm with the teat cup, or with the plurality of teat cups, until the teat cup is situated in a predetermined area with respect to the teat. This may be useful, for example, in cases where the milking robot does not detect any teat at all, or at least keeps a too large distance. By means of manual control devices, such as joy-sticks or other buttons, the operator can then bring the robot arm with the teat cup closer to the teat, until said predetermined area is reached. In particular during initial milking, this will occur frequently. In this case, the milking robot is configured so that the operator positions the robot arm from a rest position. The term rest position is intended to mean an inactive position outside the milking station, in particular outside the milking stall. Although this is a fixed position, it will be clear that this rest position is not covered by the "predetermined area", if only because this rest position is not fixed with respect to the teat. It will also be clear that attaching the cup directly from the rest position is not possible, so that the method will then have no technical significance. It should be noted that some milking robots collect the teat cups one by one from a magazine and attach them to the teats. In this case, the robot arm will thus, in principle, move from a rest position to a teat four times (in the case of dairy cows), and the operator could use the control device four times. However, in practice, a teat detection system will often be able to use positions from teats which are already attached. Other milking robots have a robot arm which carries all teat cups and thus only comes out of the rest position once per milking operation. In this case, the operator will thus only displace the robot arm for the first teat cup.

As has been indicated above, the expression "predetermined area" is an area with respect to the teat, in which the teat cup will attach with a sufficient degree of probability if it is situated within said area. The area is in this case determined either by the operator or automatically, as will be explained below. It should be noted that it is in this case deemed to be the same if the predetermined area is determined with respect to the teat cup, such as with respect to the teat-introduction opening thereof. What is important is that the teat and the teat cup are brought sufficiently close to each other. Furthermore, it should be noted that the milking robot also carries out the command given, that is to say determines the teat position with the aid of the teat detection system and attaches the teat cup or moves the teat cup directly upwards, respectively. Furthermore, it should here already be noted that the milking robot, in particular the control unit, may be configured to determine whether the teat cup has been attached to the teat correctly, which determining is then carried out, for example, either by the operator or automatically. If the teat cup has not been attached correctly, the milking robot or the operator may decide to carry out the attachment procedure again. However, this is not connected with the time savings which the present invention can offer and will therefore only be explained further below.

The way in which the control device of the milking robot is configured is not limited in any particular way, provided that it is possible to input the two different decision steps, so that the milking robot subsequently carries out the associated command. In attractive embodiments, the control device comprises a control interface having, in particular next to each other, a first operating button for the first input option and a second operating button for the second input option. With this embodiment, it is clear for the operator that there are two alternatives from which he can choose in a simple manner. In this case, "next to each other" means that the two buttons are operable simultaneously and may be situated next to one another in any position of the control device, that is to say the control plane, and may thus, for example, be one above the other after a quarter turn. It is a simple embodiment which makes it possible for the operator to concentrate fully on positioning the robot arm, in which case for example a finger can already be placed on or near the button, thus making a quick reaction possible. The buttons are, for example, push-buttons or sliding buttons or the like. The operating buttons may be situated in any location. It is possible, for example, to incorporate the second operating button into a part of the control device which is configured to position the robot arm. This is attractive in case the robot arm is being positioned by the operator, such as during initial milking. This is due to the fact that the hand which controls the control device for positioning will always be very close to the second operating button and will thus be able to react quickly. Alternatively, the second operating button may also be at a relatively great distance therefrom in order to prevent inadvertent operation of the second operating button during positioning. It should furthermore be noted here, that "next to each other" means that the first and second operating buttons are not separated by other operating buttons, even if this is not required in other embodiments. In this case, the buttons may be situated "next to each other" both horizontally and vertically or obliquely, viewed from a desired operating position of the operator.

Alternatively, the control interface comprises a single operating button for the first and second input option, wherein the control device is configured for inputting the first decision step by means of a first operation, in particular by operating the operating button once during a predetermined time period, and for inputting the second decision step by means of a second operation, in particular operating the operating button at least twice within the predetermined time period. This provides, for example, the attractive possibility to input the first decision step in those cases where the positioning of the teat cup with respect to the teat is sufficient to start teat detection, but to input the second decision step if the positioning is sufficiently accurate for directly attaching the teat cup, that is to say by simply operating the same button two or more times. This is particularly attractive for those cases where the animal moves in such a way shortly after the first option has been input that the positioning suddenly becomes sufficiently accurate to directly attach the teat cup. It then suffices to operate the button once more after having operated it for the first decision step. If this occurs within the predetermined time period, the control device will interpret this as the double input associated with the second decision step and proceed to immediate attachment. In those cases in which the predetermined time period has already elapsed, it is preferably still possible to short-circuit the normal teat-detection procedure by additionally operating the operating button two or more times and proceed directly to the attachment operation.

It should be noted that the single operating button may again be a push-button, sliding button or the like. Furthermore, the first or second operation, respectively, does not necessarily have to consist of operating the operating button once or at least twice, respectively. Thus, it is also possible for the operating button to be a movable button in a neutral position which may be, for example, slid, turned, pulled out or the like. The first operation comprises, for example, displacing (sliding, turning or the like) the operating button in a first direction or to a first degree, and the second operation comprises displacing the operating button in another direction or to another degree.

Further alternatives are possible. For example, the control interface may comprise a position-sensitive touchscreen, in which case the control device is configured for inputting the first decision step by carrying out a first touching movement on the touchscreen and for inputting the second decision step by carrying out a second, different touching movement on the touchscreen. For example, the first touching movement comprises touching a first part surface, and wherein the second touching movement comprises touching another, second part surface. This is in fact the equivalent on a touchscreen of the abovementioned two operating buttons which are situated "next to each other". However, one significant difference compared to physical operating buttons is the fact that these buttons do not have to be permanently present on a touchscreen, but only when desired, for example. Thus, it is possible to show the two buttons only during initial milking or the like, whereas they can be omitted during normal use of the milking robot. This may help to make operation more accurate and simple.

The first touching movement may also comprise an in particular substantially static local touch, and the second touching movement may comprise a displacing touching movement, in particular substantially in a vertical direction. Such a local touch corresponds to "pressing" or "clicking". In this case, "substantially static" relates to a maximum displacement which sometimes occurs inadvertently, but which was not intended to be a displacing movement. Said maximum displacement is for example predetermined, and is, for example, 1 cm or 5 mm or the like. By contrast, the displacing touching movement will have to comprise at least a predetermined displacement during the touch in order to be recognized as input for the second decision step. For example, said minimum displacement is greater than the maximum displacement permitted for the static touching movement, and is, for example, 1 cm or 2 cm or the like. Advantageously, the displacing touching movement is a movement which is directed upwards on the screen, since this will be the most natural movement for the operator in many cases if he wants to directly attach the teat cups, i.e. move them upwards. Of course, other movements are not excluded.

Yet more alternative control devices are also possible, such as voice control. In this case, consideration may be given to a spoken command "detect" for the first decision step, and "upwards" or "attach" for the second decision step. Obviously, other commands are also possible, in each desired language. In particular, the control device comprises a Google Glass or similar spectacles comprising a display and voice control features.

According to the invention, the control unit is configured to determine and store the coordinates of the teat in at least two horizontal directions from the position of the teat cup at the point in time when the operator carries out, that is to say inputs, the second decision step. During the "initial milking", it is advantageous if the coordinates of the teats can be stored, so that they can be used in order to automatically bring the robot arm to a suitable starting position during a subsequent milking operation. The present invention makes use of the fact that, according to the estimation of the operator or an automatic system, the coordinates of the teat cup/robot arm in the horizontal plane are such that the attachment operation has a high probability of being successful. In other words, the coordinates in the horizontal plane are then suitable to be stored as the coordinates for the respective teat. It should be noted that the coordinate in the vertical direction (Z coordinate) may still be unknown, but may be, for example, defined as being the coordinate at the actual moment when the teat cup is being attached. Alternatively, the control unit is furthermore configured to also store the Z coordinate at the point in time when the operator carries out the second decision step as the Z coordinate for the teat. In addition, it is obvious that when the operator selects and performs the first decision step, the coordinates of the teat subsequently found by the teat detection system can and will be stored for later use. Here, determining the coordinates corresponds to determining the position of the teat cup, which may in turn be determined, for example, from the position of a stepping motor, a linear displacer or the like of the robot arm. The coordinates found can be used for subsequent milking operations, in which case the coordinates apply in principle with respect to a fixed spot on the dairy animal, such as a rear side or the like.

In embodiments, the milking robot, in particular the robot arm or the at least one teat cup, comprises a sensor which is configured to determine a distance to the teat and to emit a signal when the distance is at most a distance threshold, wherein the signal in particular comprises a signal which is perceivable by an operator. In this embodiment, the operator is less dependent on his own judgement, but the distance or position estimate is performed automatically by the sensor. To this end, a sensor may be used such as, for example, parking sensors, such as ultrasonic sensors. In embodiments, the signal comprises a signal which is perceivable by the operator. The signal which is perceivable by the operator is for example an acoustic signal, an optical signal or a vibration in an operating button. Other possibilities are not excluded in this case. The distance threshold may be determined, for example, by the manufacturer of the milking robot, but could, in practice, also be determined and input by the operator.

The abovementioned distance is that up to the teat-receiving opening of the teat cup, and the predetermined area is defined as the maximum distance at which the attachment operation is expected still to have a sufficiently high degree of reliability. In practice, the predetermined area is determined, for example, by the operator. Thus, the operator may determine the predetermined area by assessing, in particular visually, the position of the teat cup/robot arm with respect to the teat. It should be noted that although this is a step performed by a person, the characteristic feature that the operator performs this step, that is to say compares the position of the teat cup/robot arm with that of the teat and determines if the former is situated in the predetermined area with respect to the second, is in principle constant. The predetermined area may, for example, simply relate to a distance between the teat and the teat cup, or more particularly to a semisphere or the like underneath the tip of the teat, with the dimensions of the area having been determined, for example, beforehand by the manufacturer of the milking robot. Such a distance is then for example 5 cm or the like. However, the predetermined area may thus also be predetermined by the manufacturer, in which case there is also a predetermined maximum distance at which the direct attachment operation can be performed with a sufficient degree of reliability.

In embodiments, the milking robot, in particular the control unit, is configured to receive the signal and to automatically move the teat cup upwards on the basis of the signal in order to attach it to the teat without further automatically determining the teat position. In this embodiment, the milking robot itself thus determines to perform the second decision step, based on the signal supplied to the milking robot. In this case as well, the step of determining the teat position by means of the teat detection system is skipped, but one difference is the fact that the milking robot itself starts the operation and not the operator.

In embodiments, the milking robot is furthermore configured to determine whether the teat cup has been attached to the teat correctly. In such embodiments, the control unit may furthermore be configured to subsequently retract the teat cup at least once, and either allow the operator to reposition the teat himself or to detect the teat itself and move the teat cup towards the teat until the control unit determines that the teat cup has been attached to the teat. These embodiments describe the case where the teat cup is not attached correctly, for example because the dairy animal made an unexpected move or because the milking cup was too far from the teat after all. In any case, the normal procedure is followed of retracting the teat cup and repeating the necessary steps. Obviously, this may be repeated until it is indeed found that the teat cup has been correctly attached to the teat. With this embodiment of the method, it is thus possible, in addition, to again perform the step of positioning the robot arm by the operator at a suitable point in time. This may be desirable, for example, if the dairy animal has moved too much in the milking station, so that the teat cup is no longer within the predetermined area.

In embodiments, the teat detection system is configured to determine whether the teat cup has been attached to the teat by the operator and/or the teat detection system. The teat detection system could, for example, check if the attachment has been carried out correctly by checking if the respective teat is indeed no longer detectable, and has consequently been covered by the teat cup. It should be noted that incorrectly attaching the teat cup may comprise, for example, attaching it to the udder instead of the teat or, for example, also attaching it to a folded teat. Furthermore, it is possible for the teat cup to be attached to the wrong teat. In any such cases, the teat detection system will indicate that the attachment operation was not performed correctly.

In embodiments, the milking robot comprises a pulsator system for the at least one teat cup, and the pulsator system is configured to determine whether the teat cup has been attached correctly to the teat. The pulsator system, which creates a pulsating vacuum in a lining of the teat cup and consequently an alternating opening and closing of the teat space in the teat cup, can also be used to determine if the attachment has been performed correctly. The reason for this is that the variation in pressure, both in the teat cup and in the liner of the teat cup in the situation where a teat is situated in the teat cup will be different from the situation where no teat is present in the teat cup. Furthermore, the pulsator system could also comprise a sensor for monitoring the milking vacuum or the volume in the teat space of the milking cup etc. In this case as well, an incorrectly attached teat will cause a different variation than a correctly attached teat.

In a practical method, only the first teat cup is attached to a first teat, followed by automatic attachment of teat cups to the other teats of the dairy animal by means of the teat detection system. With this method, use can be made of the fact that, once the first teat has been attached, the other teats will be within a certain maximum distance from said teat. Assuming that the predetermined area is sufficiently large to contain said other teats, the teat detection system may itself then independently find the other teats with a sufficient degree of probability, so as to subsequently attach the other teat cups thereto. It should be noted that "other teat cups" also includes the case where the teat cup on the first teat is then (temporarily) attached to in each case a subsequent teat, for example in order to clean it and/or to milk it. In addition, it is of course also possible to attach two or more or even all teat cups by means of the method, in which case therefore the steps of the method are repeated for the other teats and teat cups.

In a refinement of the method, the first teat is a fixed teat of the dairy animal. By selecting a fixed teat as the first teat to attach a teat cup to, the area in which the other teats may be situated is reduced further. After all, said area will then roughly be trapezoidal with one known corner. Advantageously, the fixed teat is a rear teat, in case the robot arm moves from the center underneath the animal backwards in order to attach the teat cup(s), as is the case with the Lely Astronaut™ system. This offers advantages during the attachment operation, since the first teat cup is then not in the way of teat cups which are to be attached later. Obviously, with other systems, for example those where attachment is effected from behind, the first teat may be a different teat.

In a refinement of the method, the operator indicates to the control unit, after the step of attaching the first teat cup, the teat to which the teat cup has been attached. In this case, the fact that the teat cup, in particular with the direct attachment step, could end up on a different teat than the originally intended one is taken into account. If it does not cause any further problems for the milking robot, it would be a waste of time to remove the teat cup and reattach it. This embodiment makes it possible to save more time. The operator may then, for example, indicate "rear left" if the teat cup has been attached to the rear left-hand teat.

The invention will be explained in more detail below with reference to the drawing, in which:
- Figures 1 and 2 show two situations with the milking robot according to the present invention, in diagrammatic and partly cut-away side view;
- Figure 3 shows an alternative control device 16' of the milking robot;
- Figure 4 shows three diagrams with operating examples; and
- Figures 5a and 5b show an alternative control device 16".

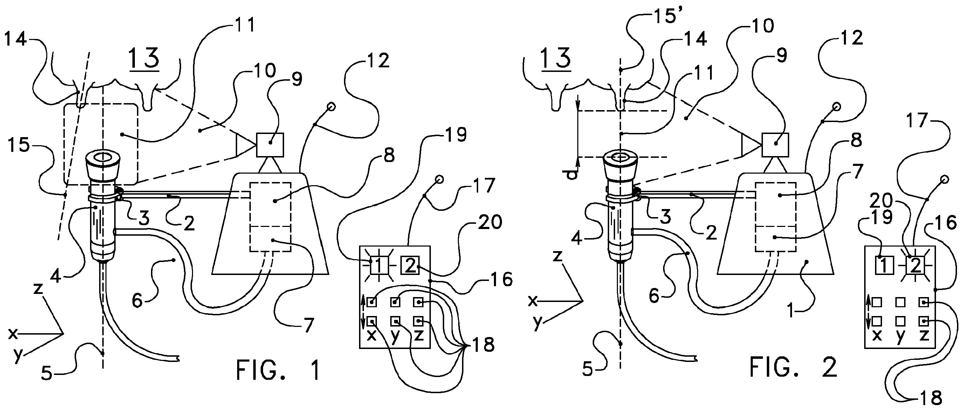

Figure 1 shows a milking robot 1 with a robot arm 2 and a gripper 3, containing a teat cup 4 with a longitudinal teat cup axis 5 and a pulsator hose 6 connected to a pulsator system 7. Reference numeral 8 denotes a control unit and reference numeral 9 denotes a teat detection camera with an image field 10. Reference numeral 11 denotes a predetermined area with respect to the teat cup 4. Furthermore, reference numeral 12 denotes an aerial.

In addition, an udder 13 with a teat 14 having a longitudinal teat axis 15 is shown.

In addition, a remote control 16 is shown having an aerial 17 and control buttons 18, as well as a first operating button 19 and a second operating button 20.

The milking robot 1 is configured to automatically attach one or more teat cups 4 to one or as many teats 14, respectively, of an udder 13. To this end, the milking robot 1 comprises a robot arm 2 with a gripper 3 which is able to bring a teat cup, either provided on the arm or in a magazine, to a teat 14 under control of the control unit 8. This is carried out using a teat detection system. In this case, such a teat detection system comprises the camera 9 with an image field 10. The camera 9 captures images from the surroundings and is able to recognize objects therein, such as a teat 14, by means of image-recognition software. In this case, the camera 9 may be equipped in many ways and comprise, for example, a video camera or two cameras or a three-dimensional camera or also other systems, such as ultrasonic systems.

The image field 10, as well as the part of the image field 10 in which the camera 9 can provide reliable information about teat position, is often limited. Therefore, in special situations, in particular with initial milking, that is to say the first time a dairy animal, such as a cow, is milked in a milking robot, the milking robot 1 is often guided by an operator when attaching the teat cup 4 to the teat 14. To this end, a control device is provided on the milking robot 1, in this case in the form of a remote control 16 which are operatively connected by means of an aerial 17 on the remote control and an aerial 12 on the milking robot. Of course, a control device may also be arranged directly on the milking robot, or a remote control which is connected by a wire or the like. On the (remote) control 16, control buttons 18 are provided, for example, which can move the robot arm 2 in three perpendicular directions to and fro. Incidentally, the directions as denoted by X, Y and Z may also be configured differently, provided a three-dimensional control of the robot arm 2 is obtained.

In the customary manner, the operator can take the robot arm 2 close to a teat 14 to which the teat cup 4 is to be attached by means of the control buttons 18. Here, the term "close to" is understood to mean "to within an area in which the teat detection camera 9 can determine the teat coordinates of the teat 14 and the milking robot can attach the teat cup 4 to the teat 14 in a sufficiently reliable manner". This area, inside which the attachment operation is "likely" to succeed is denoted by reference numeral 11 in Figure 1. Incidentally, said area 11 could also be indicated with respect to the teat 14, but this is deemed to be identical. The area may incidentally also have a different shape, such as semispherical, or inversely conical, depending on, for example, the teat-searching algorithm. If the teat, in particular the teat tip, is situated within said area 11 with respect to the teat cup 4, the teat detection device will be able to guide the teat cup to said teat 14 in a manner which is known per se. This predetermined area 11 is either a fixed area, having fixed dimensions with respect to the teat cup 4, or a slightly variable area. In most cases, the operator will operate the robot arm 2 based on his own insights when operating the robot arm 2 by means of the control buttons 18, and will try to find a balance between more accurate positioning, which requires more time, and stopping the positioning sooner in order to allow the teat detection system of the milking robot to do its work. Such a teat detection system needs some time in each case to process images or the like of the surroundings, in order to determine a teat position therefrom. During this time, a teat 14, which is after all connected to a living creature, may change position slightly. Obviously, this has an adverse effect on the speed with which the milking robot attaches the teat cup 4.

In order to instruct the milking robot to attach the teat cup 4 by means of the teat detection system, camera 9 and control unit 8, the operator may press the first operating button 19. As a result thereof, the control unit 8 will instruct the robot arm 2 and the teat detection system 9 to run through the normal teat detection process and to attach the teat cup 4.

The additional option of the milking robot according to the invention will now be explained with reference to Figure 2.

Obviously, it is possible that the teat cup 4 is placed very advantageously with respect to a teat, in this case 14' having a longitudinal teat axis 15', during positioning. In Figure 2, the longitudinal teat axis 15' itself coincides with the longitudinal teat cup axis 5. In addition, the distance d between the teat 14' and the teat cup 4 is very small. For the sake of clarity, the predetermined area 11 from Figure 1 is only indicated as the line portion between teat cup 4 and teat 14'. In the case of Figure 2, switching on the normal teat detection process would only result in delays and there would be a significant risk of losing the advantageous positioning of the teat cup 4 with respect to the teat 14'. In order to prevent this, an alternative option is provided to move the teat cup directly upwards, that is to say without the use of the teat detection system. To this end, the operator operates the second operating button 20. Because this action can be carried out very quickly in principle, in the order of magnitude of the reaction time of the operator, the risk of the animal moving the teat 14' away from the teat cup 4 is much smaller. It is therefore possible to achieve a time saving with this alternative operating option. Not only is this more advantageous with regard to the efficiency of the attachment method, but it is also beneficial for the well-being of the dairy animal.

In practice, it may even be sufficient to switch on a vacuum, such as a milking vacuum, in the teat cup 4 to bring about the connection between the teat 14' and the teat cup 4. Nevertheless, moving the teat cup 4 upwards will of course additionally provide greater reliability for the attachment operation to be successful.

Of course, it is desirable to be able to check if the teat cup 4 is attached correctly to the teat 14'. To this end, for example a teat cup vacuum or a pulsation is monitored. The latter is performed, for example, by means of a pulsator system 7 which may provide a pulsation vacuum in the teat cup 4 via a pulsator hose 6. Should the teat cup 4 be attached, for example, to the udder 13 instead of to the teat 14', the pulsation vacuum will vary to a different extent than if a teat is present in the teat cup 4. By means of the observed variations, it is possible to determine whether the teat cup 4 has been attached correctly. Obviously, different checks may also be carried out, for example using the inflow of air to the teat cup or the like.

If the attachment operation fails with the alternative control device according to the invention, for example due to an unexpected movement of the dairy animal, this does not have to result in a loss of time compared to the known method, since additional steps, up to reattaching the teat cup 4, will be required even when using the known method. However, partly because the milking robot according to the invention offers a speed advantage, and the dairy animals take less time for the initial milking, which is a situation which is new to them, such an unexpected movement will occur less often as the stress level is expected to be lower.

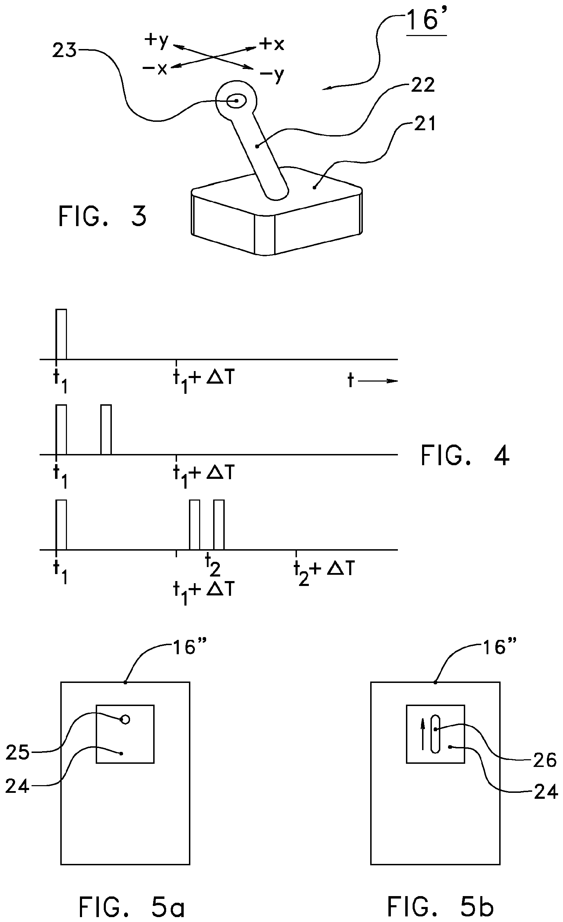

Figure 3 shows an alternative control device 16' of the milking robot. It comprises a console 21 with a joystick 22 provided with a push-button 23. For the sake of clarity, no other control buttons are illustrated here.

The joystick is movable in the four directions indicated by arrows in order thus to displace the robot arm with teat cup in corresponding directions. The push-button 23 serves to input the first or second decision step. The operator may, for example, push the push-button 23 once to input the first decision step, i.e. normal and automatic detection of the teat and attachment of the teat cup. Alternatively, the operator can quickly push the push-button 23 two or more times in succession in order thus to input the second decision step, i.e. cause the robot arm with the teat cup to move directly upwards. Figure 4 will explain a few cases of the operation of the push-button in more detail.

Figure 4 shows three diagrams with examples of the operation of the push-button 23 of the control device 16' from Figure 3. Incidentally, these diagrams may in principle apply to all control devices in which the first and second decision steps are input by means of one operating button. The upper diagram shows the case in which the operating button is pushed once at instant t1, and subsequently not again until at least instant t1+ΔT. This is taken to be the first decision step, and the control unit of the milking robot will act accordingly. In this case, the control unit may assume the first decision step immediately at instant t1 or only after time period ΔT has elapsed. In this case, the former option is preferred for reasons of speed. The time period ΔT may be predetermined, and may, for example, be 1s or 2s or the like.

The central diagram shows the case where the push-button or operating button 23 is operated again within the time period ΔT after it has been pushed once at instant t1. This will be interpreted by the control unit as inputting the second decision step, following which the control unit will act accordingly and will directly attach the cup by moving upwards.

The bottom diagram shows the case where the operating button is pushed at instant t1, followed by the period ΔT during which it is not pushed again, is pushed again at instant t2 and again within a subsequent time period ΔT. This will be interpreted by the control unit as still inputting the second decision step, following which a routine to determine the teat position automatically which may or may not have started already is aborted and the teat cup is moved directly upwards. This may be the case, for example, if the animal moves in an advantageous way, and also offers a solution if the operator inadvertently forgets to push the button a second time within the time period ΔT.

Figures 5a and 5b show an alternative control device 16" with a different control interface. The control interface comprises one touchscreen 24, in which case Figure 5a diagrammatically shows a first touching movement in circle 25, and Figure 5b shows a second touching movement in elongate plane 26, which takes place in the direction of the arrow. In this case, the first touching movement in Figure 5a is a local, in principle static touch, inside a circle having maximum dimensions, such as a radius of 1 or 2 cm, and initiates the first decision step. The second touching movement is a "swipe" towards the top, and initiates the second decision step, i.e. moving directly upwards. The second touching movement not only differs from the first, but is in addition also natural, due to the similarity with the intended movement of the cup, thus reducing the risk of mistakes.

The illustrated embodiments are not intended to be limiting, but solely to improve understanding of the invention, as defined in the attached claims.

## Claims

1. A milking robot (1) comprising
- a teat detection system (9) for determining a teat position of the teat (14),
- at least one teat cup (4),
- a robot arm (2) for positioning the teat cup, and
- a control unit (8) for the milking robot,
wherein the milking robot, and in particular the control unit, furthermore comprises a control device (16; 16'; 16") which is configured to offer an operator a first input option for a first decision step and a second input option for a second decision step, wherein the milking robot is configured:
- to carry out, when the first decision step is input according to the first input option (19), a command to automatically determine the teat position by means of the teat detection system and to attach the teat cup to said teat with the determined teat position; and
- to carry out, when the second decision step is input according to the second input option (20), a command to move the teat cup, in particular substantially immediately, upwards in order to attach it to the teat without subsequently having the milking robot automatically determine the teat position,
wherein the control unit is configured to determine and store the coordinates of the teat in at least two horizontal directions from the position of the teat cup at the point in time when the operator carries out the second decision step.

2. The milking robot as claimed in claim 1, wherein the control device comprises a control interface having, in particular next to each other, a first operating button for the first input option and a second operating button for the second input option.

3. The milking robot as claimed in claim 1 or 2, wherein the control interface comprises a single operating button (23) for the first and second input option, wherein the control device is configured for inputting the first decision step by means of a first operation, in particular by operating the operating button once during a predetermined time period, and for inputting the second decision step by means of a second operation, in particular by operating the operating button at least twice within the predetermined time period.

4. The milking robot as claimed in one of the preceding claims, wherein the control interface comprises a position-sensitive touchscreen (24) and wherein the control device is configured for inputting the first decision step by carrying out a first touching movement on the touchscreen and for inputting the second decision step by carrying out a second, different touching movement on the touchscreen.

5. The milking robot as claimed in claim 4, wherein the first touching movement comprises touching a first part surface (25), and wherein the second touching movement comprises touching another, second part surface (26).

6. The milking robot as claimed in claim 4 or 5, wherein the first touching movement comprises an in particular substantially static local touch, and wherein the second touching movement comprises a displacing touching movement, in particular substantially in a vertical direction.

7. The milking robot as claimed in one of the preceding claims, wherein the milking robot, in particular the robot arm (2) or the at least one teat cup, comprises a sensor (9) which is configured to determine a distance to the teat and to emit a signal when the distance is at most a distance threshold, wherein the signal in particular comprises a signal which is perceivable by an operator.

8. The milking robot as claimed in one of the preceding claims, wherein the control unit is furthermore configured to determine whether the teat cup has been attached to the teat correctly.

## Patentansprüche

1. Melkroboter (1), der Folgendes umfasst:
- ein Zitzendetektionssystem (9) zum Bestimmen einer Zitzenposition der Zitze (14),
- mindestens einen Zitzenbecher (4),
- einen Roboterarm (2) zum Anordnen des Zitzenbechers, und
- eine Steuereinheit (8) für den Melkroboter,
wobei der Melkroboter, und insbesondere die Steuereinheit, ferner eine Steuervorrichtung (16; 16'; 16") umfasst, die konfiguriert ist, einer Bedienperson eine erste Eingabewahlmöglichkeit für einen ersten Entscheidungsschritt und eine zweite Eingabewahlmöglichkeit für einen zweiten Entscheidungsschritt anzubieten, wobei der Melkroboter konfiguriert ist:
- dann, wenn der erste Entscheidungsschritt gemäß der ersten Eingabewahlmöglichkeit (19) eingegeben wird, einen Befehl auszuführen, die Zitzenposition mittels des Zitzendetektionssystems automatisch zu bestimmen und den Zitzenbecher mit der bestimmten Zitzenposition an der Zitze zu befestigen; und
- dann, wenn der zweite Entscheidungsschritt gemäß der zweiten Eingabewahlmöglichkeit (20) eingegeben wird, einen Befehl auszuführen, den Zitzenbecher, insbesondere im Wesentlichen unverzögert, nach oben zu bewegen, um ihn an der Zitze zu befestigen, ohne dass der Melkroboter anschließend die Zitzenposition automatisch bestimmt,
wobei die Steuereinheit konfiguriert ist, die Koordinaten der Zitze in mindestens zwei horizontalen Richtungen von der Position des Zitzenbechers zu dem Zeitpunkt, wenn die Bedienperson den zweiten Entscheidungsschritt ausführt, zu bestimmen und zu speichern.

2. Melkroboter nach Anspruch 1, wobei die Steuervorrichtung eine Steuerschnittstelle umfasst, die, insbesondere nebeneinander, einen ersten Bedienknopf für die erste Eingabewahlmöglichkeit und einen zweiten Bedienknopf für die zweite Eingabewahlmöglichkeit aufweist.

3. Melkroboter nach Anspruch 1 oder 2, wobei die Steuerschnittstelle einen einzigen Bedienknopf (23) für die erste und die zweite Eingabewahlmöglichkeit umfasst, wobei die Steuervorrichtung zum Eingeben des ersten Entscheidungsschritts mittels einer ersten Betätigung, insbesondere durch Betätigen des Bedienknopfs einmal während eines vorgegebenen Zeitraums, und zum Eingeben des zweiten Entscheidungsschritts mittels einer zweiten Betätigung, insbesondere durch Betätigen des Bedienknopfs mindestens zweimal innerhalb des vorgegebenen Zeitraums, konfiguriert ist.

4. Melkroboter nach einem der vorhergehenden Ansprüche, wobei die Steuerschnittstelle einen positionsempfindlichen Berührungsbildschirm (24) umfasst und wobei die Steuervorrichtung zum Eingeben des ersten Entscheidungsschritts durch Ausführen einer ersten berührenden Bewegung auf dem Berührungsbildschirm und zum Eingeben des zweiten Entscheidungsschritts durch Ausführen einer zweiten unterschiedlichen, berührenden Bewegung auf dem Berührungsbildschirm konfiguriert ist.

5. Melkroboter nach Anspruch 4, wobei die erste berührende Bewegung das Berühren einer ersten Teiloberfläche (25) umfasst und wobei die zweite berührende Bewegung das Berühren einer weiteren, zweiten Teiloberfläche (26) umfasst.

6. Melkroboter nach Anspruch 4 oder 5, wobei die erste berührende Bewegung eine insbesondere im Wesentlichen statische, lokale Berührung umfasst und wobei die zweite berührende Bewegung eine versetzende, berührende Bewegung, insbesondere im Wesentlichen in einer vertikalen Richtung, umfasst.

7. Melkroboter nach einem der vorhergehenden Ansprüche, wobei der Melkroboter, insbesondere der Roboterarm (2) oder der mindestens eine Zitzenbecher, einen Sensor (9) umfasst, der konfiguriert ist, einen Abstand zur Zitze zu bestimmen und ein Signal zu emittieren, wenn der Abstand höchstens ein Abstandsschwellenwert ist, wobei das Signal insbesondere ein Signal, das durch eine Bedienperson wahrnehmbar ist, umfasst.

8. Melkroboter nach einem der vorhergehenden Ansprüche, wobei die Steuereinheit ferner konfiguriert ist, zu bestimmen, ob der Zitzenbecher richtig an der Zitze befestigt worden ist.

## Revendications

1. Robot de traite (1) comprenant
- un système de détection de trayon (9) pour déterminer une position de trayon du trayon (14),
- au moins un gobelet trayeur (4),
- un bras de robot (2) pour positionner le gobelet trayeur, et
- une unité de commande (8) du robot de traite,
le robot de traite, et en particulier l'unité de commande, comprenant en outre un dispositif de commande (16 ; 16'; 16") qui est configuré pour offrir à un opérateur une première option d'entrée pour une première étape de décision et une seconde option d'entrée pour une seconde étape décision,
le robot de traite étant configuré pour :
- réaliser, quand la première étape de décision est entrée conformément à la première option d'entrée (19), une commande afin de déterminer automatiquement la position de trayon au moyen du système de détection de trayon et attacher le gobelet trayeur audit trayon avec la position de trayon déterminée, et
- réaliser, quand la seconde étape de décision est entrée conformément à la seconde option d'entrée (20), une commande pour déplacer le gobelet trayeur, en particulier sensiblement immédiatement, vers le haut afin de l'attacher au trayon sans que le robot de traite ait déterminé ensuite automatiquement la position de trayon,
dans lequel l'unité de commande est configurée pour déterminer et mémoriser les coordonnées du trayon dans au moins deux sens horizontaux à partir de la position du gobelet trayeur à l'instant où l'opérateur entre la seconde étape de décision.

2. Robot de traite selon la revendication 1, dans lequel le dispositif de commande comprend une interface de commande présentant, en particulier l'une à côté de l'autre, une première touche de fonctionnement pour la première option d'entrée et une seconde touche de fonctionnement pour la seconde option d'entrée.

3. Robot de traite selon la revendication 1 ou 2, dans lequel l'interface de commande comprend une même touche de fonctionnement (23) pour les première et seconde options d'entrée, dans lequel le dispositif de commande est configuré pour entrer la première étape de décision au moyen d'une première opération, en particulier en actionnant une fois la touche de fonctionnement durant une période de temps prédéterminée, et pour entrer la seconde étape de décision au moyen d'une seconde opération, en particulier en actionnant la touche de fonctionnement au moins deux fois dans la période de temps prédéterminée.

4. Robot de traite selon l'une des revendications précédentes, dans lequel l'interface de commande comprend un écran tactile sensible à la position (24) et dans lequel le dispositif de commande est configuré pour entrer la première étape de décision en réalisant un premier mouvement de toucher sur l'écran tactile et pour entrer la seconde étape de décision en réalisant un second mouvement de toucher différent sur l'écran tactile.

5. Robot de traite selon la revendication 4, dans lequel le premier mouvement de toucher comprend le toucher d'une première surface partielle (25), et dans lequel le second mouvement de toucher comprend le toucher d'une seconde surface partielle différente (26).

6. Robot de traite selon la revendication 4 ou 5, dans lequel le premier mouvement de toucher comprend en particulier un toucher local sensiblement statique, et dans lequel le second mouvement de toucher comprend un mouvement de toucher de déplacement, en particulier sensiblement dans un sens vertical.

7. Procédé selon l'une des revendications précédentes, dans lequel le robot de traite, en particulier le bras de robot (2) ou l'au moins un gobelet trayeur, comprend un capteur (9) qui est configuré pour déterminer une distance jusqu'au trayon et pour émettre un signal quand la distance est au plus un seuil de distance, dans lequel le signal comprend en particulier un signal qui peut être perçu par un opérateur.

8. Robot de traite selon l'une des revendications précédentes, dans lequel l'unité de commande est configurée en outre pour déterminer que le gobelet trayeur a été attaché au trayon correctement ou non.
